# EUROPÄISCHE PATENTSCHRIFT

(11) **EP 3 630 442 B1**
(45) Veröffentlichungstag und Bekanntmachung des Hinweises auf die Patenterteilung: **28.04.2021**
(21) Anmeldenummer: 18746565.3
(22) Anmeldetag: 21.06.2018
(51) Int. Cl.: B29C 45/26, B29C 45/33

(54) **VORRICHTUNG ZUM FESTSETZEN UND/ODER LÖSEN VON SPRITZGUSSFORMEN, MITTEL UND VERFAHREN**
DEVICE FOR SECURING AND/OR RELEASING INJECTION MOULDS, MEANS AND METHOD
DISPOSITIF DE FIXATION ET/OU DE LIBÉRATION DE MOULES À INJECTION, MOYEN ET PROCÉDÉ

(30) Priorität: 22.06.2017 DE 102017005903
(43) Veröffentlichungstag der Anmeldung: 08.04.2020
(73) Patentinhaber: Stack Mold Plus UG, 63868 Großwallstadt (DE)
(72) Erfinder: WOLF, Manfred, 63868 Großwallstadt (DE)
(74) Vertreter: Nitz, Astrid
(86) Internationale Anmeldenummer: PCT/DE2018/000193
(87) Internationale Veröffentlichungsnummer: WO 2018/233742

(56) Entgegenhaltungen:
- WO-A2-2006/019504
- DE-U1-202007 006 808
- JP-A- 2000 346 106
- US-A- 4 765 585
- US-A- 5 397 226
- Anonym: "Slide Retainers", , 18. März 2015 (2015-03-18), Seiten 1-2, XP055519322, Gefunden im Internet: URL:http://www.procomps.com/new/PRO-SRT-20 15.pdf [gefunden am 2018-10-26]
- Progressive Components: "Progressive's SRT Series Slide Retainers", Youtube, 14. Februar 2017 (2017-02-14), Seite 1, XP054978824, Gefunden im Internet: URL:https://www.youtube.com/watch?v=QJxfyh OiTMQ [gefunden am 2018-10-25]
- Anonym: "Schiebersicherung Z1892, Z1893", Hasco Einbauhinweise, 25. April 2016 (2016-04-25), Seiten 1-2, XP055519099, Gefunden im Internet: URL:https://www.hasco.com/medias/Z1892-Z18 93-EBH-DE-EN-FR.pdf?context=bWFzdGVyfGltYW dlc3wxOTE1Mzh8YXBwbGljYXRpb24vcGRmfGltYWdl cy9oZDQvaDA1LzkyMDYzODU0NzU2MTQucGRmfDczNm FiNjI2YmNjNjk0YmE5ZTJlNzY0MzRmMGUxMWY0NmUy Yjk0M2I4ZmU1NjM2MGI4YzE4MTIxNGIzY2JjNjc [gefunden am 2018-10-25]
- Anonym: "Roller Slide Retainer - RIT", , 15. September 2016 (2016-09-15), Seite 1, XP055519384, Gefunden im Internet: URL:http://www.ermannobalzi.com/files/RIT/ RIT_EN.pdf [gefunden am 2018-10-26]
- Anonym: "SLK-25BLUE", , 17. Juni 2014 (2014-06-17), Seite 1, XP055519400, Gefunden im Internet: URL:https://www.supdie.com/wp-content/uplo ads/2015/10/slk_25b.pdf [gefunden am 2018-10-26]
- Anonym: "Schieberhaltevorrichtung mit Gehäuse flach", , 14. November 2011 (2011-11-14), Seite 1, XP055519395, Gefunden im Internet: URL:https://ecom.meusburger.com/files/pdf/ e/e3048.pdf [gefunden am 2018-10-26]
- Anonym: "Mini-Might Slight Retainers", , 4. April 2016 (2016-04-04), Seite 1, XP055519392, Gefunden im Internet: URL:http://www.m-d-s.co.za/files/Slide-Ret ainers---PSR_opt_hek5qds8.pdf [gefunden am 2018-10-26]

## Beschreibung

Die Erfindung betrifft eine Vorrichtung zum Festsetzen und/oder Lösen von Spritzgussformen für Kunststoffspritzguss nach dem Oberbegriff von Anspruch 1, ein Mittel zum Festsetzen nach dem Oberbegriff von Anspruch 9 und ein Verfahren zum Verwenden einer Vorrichtung zum Festsetzen und/oder Lösen von Spritzgussformen für Kunststoffspritzguss nach dem Oberbegriff von Anspruch 10.

Beim Kunststoffspritzgießen wird ein Kunststoffgranulat aufgeschmolzen und in einen Hohlraum eines Spritzgießwerkzeugs eingespritzt. Im Allgemeinen umfasst ein Spritzgießwerkzeug beim Kunststoffspritzgießen ein Düsenteilelement und ein Auswerferteilelement, sowie verschiedene weitere Elemente, wie beispielsweise ein Angusssystem, Kavitäteneinsätze, Auswerferelemente und Kühlung.

Beim Entformen des Spritzgießteils können Entformungsprobleme, beispielsweise aufgrund von Hinterschneidungen, mit Hilfe einer Schiebertechnik gelöst werden. Hierbei werden mittels vorbeigeschobenen Formteilbereichen Hilfstrennebenen im Spritzgießwerkzeug erzeugt, um kritische Bereiche des Spritzgießteils freizustellen, die beispielsweise in Entformungsrichtung eine Hinterschneidung darstellen. Vorbeigeschobenen Formteilbereiche können in dem Düsenteilelement oder in dem Auswerferteilelement eingebracht sein.

Bekannt sind derartige Elemente beispielsweise aus der WO 2006/019504 A2 und "Slide Retainers", 18.März 2015 (2015-03-18), S. 1-2, XP055519322.

Die vorbeigeschobenen Formteilbereiche bewegen sich quer zur Öffnungsrichtung des Werkzeuges. Beim Öffnen des Werkzeuges laufen die vorbeigeschobenen Formteilbereiche in einem festgelegten Winkel seitlich aus der Kavität heraus. Die Bewegung der vorbeigeschobenen Formteilbereiche kann mechanisch oder hydraulisch erfolgen. Während des Entformungsvorgangs, bei dem das Spritzgießwerkzeug auffährt und das Spritzgießteil entformt und ausgeworfen wird, ist ein zuverlässiges Halten des vorbeigeschobenen Formteilbereichs auf der gewünschten Position mit Hilfe einer Schiebersicherung beispielsweise in Form einer Schieberaste mit einer Rolle zum Drüberrollen und einer Schieberastfeder vorgesehen.

Aufgabe der vorliegenden Erfindung ist es, eine sichere und zuverlässige Vorrichtung zum Festsetzen und/oder Lösen von Spritzgussformen für Kunststoffspritzguss bereitzustellen.

Die Aufgabe wird gelöst durch eine Vorrichtung zum Festsetzen und/oder Lösen von Spritzgussformen für Kunststoffspritzguss, die zumindest zwei aufeinander abgestimmte, gegenüberliegende Spritzgießwerkzeugteileelemente aufweisen, insbesondere ein Düsenteilelement und ein Auswerferteilelement, umfassend verschiebliche Bereiche mit vorbeischiebbaren Formteilbereichen eine Schieberaste, die in einem aufnehmenden Formteilbereich angeordnet ist und in vorbestimmte, angepasste Bereiche des entsprechenden, vorbeischiebbaren Formteilbereich ausfahrbar ist, umfassend eine in einem Gehäuse drehbar gelagerte Rolle zum Überrollen durch den vorbeischiebbaren Formteilbereich, ein federndes Druckstück, umfassend das Gehäuse und eine gegen das Gehäuse drückende Schieberastfeder, zum Einrasten in eine Ausnehmung, insbesondere Nut oder Aussparung, im vorbeischiebbaren Formteilbereich, wobei das Gehäuse ein Spannungsvorsprungsmittel in einem Umfangsbereich zum Verspannen mittels der Schieberastfeder aufweist, eine oder mehrere Festsetzschrauben, die durch das Gehäuse hindurch geführt in eine angepasst ausgebildete Aufnahme im aufnehmenden Formteilbereich eingeschraubt ist, wobei ein in dem Gehäuse angeordnetes, zentrales Durchführungsmittel vorgesehen ist, wobei die eine oder mehreren Festsetzschrauben durch jeweils eine Durchgangsöffnung des Durchführungsmittels hindurchführt ist/sind, wobei mittels eines an einem Umfang des Durchführungsmittels vorgesehener Kontaktvorsprungs ein Kontakt des Durchführungsmittels an einem korrespondierenden Umlaufvorsprung in einem Innenbereich des Gehäuses vorgesehen ist, und ein unterer Auflagebereich eine Auflage auf einen korrespondierenden Aufsetzbereich mit einem Randbereich der Aufnahme im aufnehmenden Formteilbereich bildet

Eine erfindungsgemäße Schiebersicherung erfolgt somit durch ein sicheres Einrasten der Schieberaste in dem vorbeischiebbaren Formteilbereich, wodurch ein Halten des Schiebers erfolgt, während das Spritzgießteil entformt/ausgeworfen wird, wodurch ein Sicherstellen eines fehlerlosen Spritzgießprozesses erfolgt und die Prozesssicherheit verbessert wird. Das Schieberraster sitzt exakt in der Ausnehmung und kann die Funktion der Schiebersicherung sicher insbesondere durch das stabilisierende Durchführungsmittel erfüllen. Der vorbeigeschobene Formteilbereich, der gesichert werden soll, ist vorteilhaft mit einer angepassten Ausnehmung, insbesondere einer Nut / Aussparung, versehen, wobei der vorbeigeschobenen Formteilbereich eine Fahrbewegung über den Schieberraster macht. Dabei rollt die Rolle um die Achse und drückt das Gehäuse mit der Schieberastfeder nach unten, bis die Schieberaste die Ausnehmung im vorbeigeschobenen Formteilbereich erreicht und dort sichernd einspringt.

Insbesondere durch die vorgesehenen angepassten Durchführungsmittel mit dem stabilisierenden Kontaktvorsprung und der unteren Auflagefläche kann eine exakte Einbauhöhe des Schieberasters realisiert werden. Ein zu hohes Anziehmoment beim Einschrauben, bei der Kraftaufbringung beim Eindrehen der Schraube wird beim Einsetzen der Vorrichtung verhindert. Das Schieberraster sitzt nicht zu tief in der Ausfräsung, wodurch genügend Federweg vorhanden ist und die Funktionserfüllung gegeben ist. Auch nach mehreren Zyklen lösen sich die Festsetzschrauben nicht. Die definierte Einschraubtiefe des Schieberrasters während der Montage ist sicher einzustellen, so dass Fehler vermieden werden. Die Montage ist erleichtert, da eine sichere Führung gegeben ist. Auch eine Entgratung der Bohrungen kann erfolgen, ohne dass der Halt der Schieberaste gestört wird. Durch die Größe der Auflagefläche des Anschlags, insbesondere beispielsweise gegenüber einer Ringfläche um den Faktor 10 vergrößert ist ein definiertes Einschrauben des Schieberrasters in der Ausnehmung sichergestellt und die Position kann eingehalten werden, wodurch eine zuverlässige Funktionserfüllung des Schieberrasters gewährleistet ist. Die Vorrichtung weist eine kompakte Bauweise auf und ermöglicht eine erleichterte Montage im Spritzgießwerkzeug, eine Aufnahme/ Sicherung der vorbeigeschobenen Formteilbereiche ist auch bei hohen Schiebergewichten und zugleich sehr kompakter Bauweise möglich. Es ist keine Schmierung notwendig und somit auch für Reinraum geeignet. Durch austauschbare Federn mit unterschiedlichen Kräften ist ein einfaches Abstimmen möglich

Vorteilhaft ist es, wenn der untere Auflagebereich des Durchführungsmittels mindestens etwa eine Fläche aufweist, die größer als eine Ringfläche an einem Randbereich um die Aufnahme oder Aufnahmen für die eine oder mehreren Festsetzschrauben herum mit einer vorbestimmten Dicke ausgebildet ist, insbesondere eine Ringfläche mit etwa 0,5- etwa 1 mm Dicke.

Vorteilhaft ist es, wenn der untere Auflagebereich des Durchführungsmittels als Ovalfläche oder als Kreisfläche über eine Ringfläche hinausragend ausgebildet ist.

Vorteilhaft ist es, wenn der Kontaktvorsprung des Durchführungsmittels als umlaufender Vorsprung durchgehend ausgebildet ist, insbesondere angepasst an die Form des Durchführungsmittels, insbesondere als oval verlaufender Vorsprungsbereich oder als kreisförmiger Vorsprungsbereich und/oder der Vorsprungsbereich eine Tiefe von ungefähr 15% eines Durchmessers des Durchführungsmittels aufweist.

Vorteilhaft ist es, wenn eine Festsetzschraube außermittig, insbesondere in einem Ovalzentrum oder außermittig von einer Kreisfläche des unteren Auflagebereichs angeordnet ist und/oder jeweils zwei Festsetzschrauben durch den unteren Auflagebereich hindurchragend ausgebildet sind, insbesondere jeweils in einem Ovalzentrum der Ovalfläche oder außermittig einer Kreisfläche des unteren Auflagebereichs angeordnet sind und/oder der

Vorteilhaft ist es, wenn der untere Auflagebereich eine Flächenbreite aufweist, die etwa einem Durchmesser einer Festsetzschraube entspricht.

Vorteilhaft ist es, wenn größere Festsetzschrauben, im Verhältnis zu der Größe des Gehäuses zu verwenden sind, die Gewindeausnehmungen nicht zu erodieren sind, insbesondere M4- oder M5-Schrauben als Festsetzschrauben einzusetzen sind. Gewinde für Schrauben kleiner als M4 sind sehr schwer herzustellen und müssen meistens erodiert werden, wobei der Stahl eine Festigkeit von 1100 N/mm2 hat. Erodieren ist hierfür ein teures, aufwendiges Verfahren, das verursacht auch bei Reparaturen hohe Kosten.

Vorteilhaft ist es, wenn die Schieberastfeder austauschbar ist, so dass je nach Anforderungen des vorbeischiebbaren Formteilbereichen austauschbare Schieberastfeder mit verschiedenen Auslösekräften/Auslösehaltekraft einzusetzen sind.

Vorteilhaft ist es, wenn die Schieberastfeder austauschbar ist, so dass je nach Anforderungen des vorbeischiebbaren Formteilbereichen austauschbare Schieberastfeder mit verschiedenen Auslösekräften/Auslösehaltekraft einzusetzen sind.

Die Aufgabe wird ebenfalls gelöst durch ein Mittel zum Sichern einer Schieberaste eines vorbeischiebbaren Formteilbereichen einer Spitzgussform, mit einer in einem Gehäuse drehbar gelagerten Rolle, einem federnden Druckstück, umfassend das Gehäuse und eine gegen das Gehäuse drückende Schieberastfeder, mit einer oder mehrerer Festsetzschrauben, die durch das Gehäuse hindurch geführt in eine angepasst ausgebildete Aufnahme in einem aufnehmenden Formteilbereich einschraubbar sind, wobei ein in dem Gehäuse angeordnetes, zentrales Durchführungsmittel vorgesehen ist, wobei die eine oder mehreren Festsetzschrauben durch jeweils eine Durchgangsöffnung des Durchführungsmittels hindurchführt ist/sind, wobei mittels eines an einem Umfang des Durchführungsmittels vorgesehener Kontaktvorsprungs ein Kontakt des Durchführungsmittels an einem korrespondierenden Umlaufvorsprung in einem Innenbereich des Gehäuses vorgesehen ist, und ein unterer Auflagebereich eine Auflage auf einen korrespondierenden Aufsetzbereich zur Aufnahme im aufnehmenden Formteilbereich bildet.

Die Aufgabe wird ebenfalls gelöst durch ein Verfahren zum Verwenden einer Vorrichtung zum Festsetzen und/oder Lösen von Spritzgussformen für Kunststoffspritzguss, die zumindest zwei aufeinander abgestimmte, gegenüberliegende Spritzgießwerkzeugteileelemente aufweisen, insbesondere ein Düsenteilelement und ein Auswerferteilelement, nach einem der Ansprüche 1 bis 8, umfassend verschiebliche Bereiche mit vorbeischiebbaren Formteilbereichen (Schieber), eine Schieberaste, die in einem aufnehmenden Formteilbereich angeordnet wird und in vorbestimmte, angepasste Bereiche des entsprechenden, vorbeischiebbaren Formteilbereich ausgefahren wird, umfassend eine in einem Gehäuse drehbar gelagerte Rolle zum Überrollen durch den vorbeischiebbaren Formteilbereich, ein federndes Druckstück, umfassend das Gehäuse und eine gegen das Gehäuse drückende Schieberastfeder, zum Einrasten in eine Ausnehmung, insbesondere Nut oder Aussparung, im vorbeischiebbaren Formteilbereich, eine oder mehrere Festsetzschrauben, die durch das Gehäuse hindurch in eine angepasst ausgebildete Aufnahme im aufnehmenden Formteilbereich eingeschraubt wird, wobei die eine oder mehreren Festsetzschrauben durch jeweils eine Durchgangsöffnung eines in dem Gehäuse angeordnetem, zentralen Durchführungsmittels hindurchführt wird/werden, wobei mittels eines an einem Umfang des Durchführungsmittels vorgesehener Kontaktvorsprungs ein Kontakt des Durchführungsmittels an einem korrespondierenden Umlaufvorsprung in einem Innenbereich des Gehäuses hergestellt wird, und ein unterer Auflagebereich eine Auflage auf einen korrespondierenden Aufsetzbereich (mit einem Randbereich) der Aufnahme im aufnehmenden Formteilbereich bildet

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: erfindungsgemäße Vorrichtung zum Festsetzen und/oder Lösen von Spritzgussformen,
- Fig. 2: ein erfindungsgemäßes Mittel zum Sichern eines vorbeischiebbaren Formteilbereichen in Form einer Schieberaste,
- Fig. 3: ein erfindungsgemäßes Mittel zum Sichern eines vorbeischiebbaren Formteilbereichen in Form einer Schieberaste,
- Fig. 4: ein erfindungsgemäßes Mittel zum Sichern eines vorbeischiebbaren Formteilbereichen in Form einer Schieberaste,
- Fig. 5: ein erfindungsgemäßes Mittel zum Sichern eines vorbeischiebbaren Formteilbereichen in Form einer Schieberaste und
- Fig. 6: ein Ausschnitt eines erfindungsgemäßen Mittels zum Sichern eines vorbeischiebbaren Formteilbereichen.

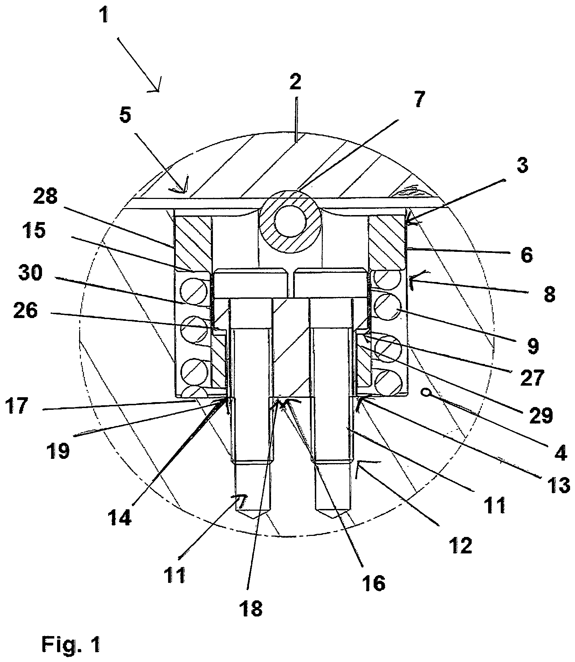

Fig. 1 zeigt eine erfindungsgemäße Vorrichtung 1 zum Festsetzen und/oder Lösen von Spritzgussformen für Kunststoffspritzguss, die zumindest zwei aufeinander abgestimmte, gegenüberliegende Spritzgießwerkzeugteileelemente aufweisen, insbesondere ein Düsenteilelement und ein Auswerferteilelement, umfassend verschiebliche Bereiche mit vorbeischiebbaren Formteilbereichen 2, eine Schieberaste 3, die in einem aufnehmenden Formteilbereich 4 angeordnet ist und in vorbestimmte, angepasste Bereiche 5 des entsprechenden, vorbeischiebbaren Formteilbereich 2 ausfahrbar ist, umfassend eine in einem Gehäuse 6 drehbar gelagerte Rolle 7 zum Überrollen durch den vorbeischiebbaren Formteilbereich 2, ein federndes Druckstück 8, umfassend das Gehäuse 6 und eine gegen das Gehäuse 6 drückende Schieberastfeder 9, zum Einrasten in eine nicht dargestellte Ausnehmung, insbesondere Nut oder Aussparung, im vorbeischiebbaren Formteilbereich 2, eine oder mehrere Festsetzschrauben 11, die durch das Gehäuse 6 hindurch in eine angepasst ausgebildete Aufnahme 12 im aufnehmenden Formteilbereich 4 eingeschraubt ist, wobei die eine oder mehreren Festsetzschrauben 11 durch eine Durchgangsöffnung 13 eines Durchführungsmittels 14 hindurchführt sind, das in dem Gehäuse 6 angeordnet ist. Eine oder mehrere Festsetzschrauben 11 sind durch jeweils eine Durchgangsöffnung 13 des Durchführungsmittels 14 hindurchführt, wobei mittels eines an einem Umfang 30 des Durchführungsmittels 14 vorgesehener Kontaktvorsprungs 26 ein Kontakt des Durchführungsmittels 14 an einem korrespondierenden Umlaufvorsprung 27 in einem Innenbereich 29 des Gehäuses 6 vorgesehen ist, und ein unterer Auflagebereich 16 eine Auflage auf einen korrespondierenden Aufsetzbereich 17 mit einem Randbereich 18 der Aufnahme 12 im aufnehmenden Formteilbereich 4 bildet.

Ein Spannungsvorsprung 15 zum Verspannen des Gehäuses 6 mittels einer Schieberastfeder 9 ist vorgesehen, wobei das Durchführungsmittel 14 an einem unteren Auflagebereich 16 einen Anschlag 17 mit einem Randbereich 18 der Aufnahme 12 im aufnehmenden Formteilbereich 4 bildet, wobei der untere Auflagebereich 16 mindestens etwa eine Fläche 18 aufweist, die größer als eine Ringfläche 19 mit einer vorbestimmten Dicke, insbesondere mit etwa 0,5 - etwa 1 mm Dicke um eine Festsetzschraube 11, ausgebildet ist.

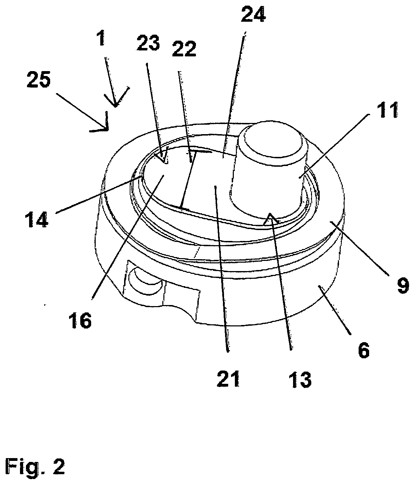

Fig. 2 zeigt ein erfindungsgemäßes Mittel 25 zum Sichern eines vorbeischiebbaren Formteilbereichen in Form einer Schieberaste mit Ansicht von unten auf einen unteren Auflagebereich 16. Beispielhaft ist ein Auflagebereich mit einer großen Fläche 23 und einer flächenbreite 22 als Ovalfläche 24 dargestellt, bei dem in einem außermittigen Ovalzentrum 21 eine Festsetzschraube 11 durchgeführt ist.

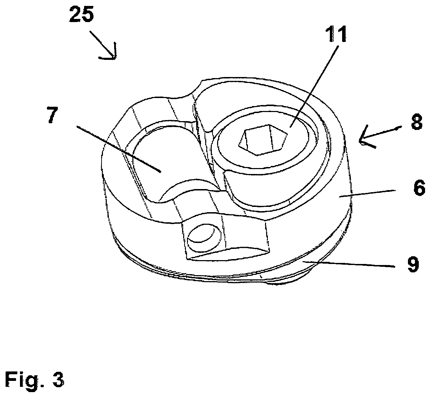

Fig. 3 zeigt ein erfindungsgemäßes Mittel 25 zum Sichern eines vorbeischiebbare Formteilbereichen in Form einer Schieberaste von oben mit einer Rolle 7 im Gehäuse 6.

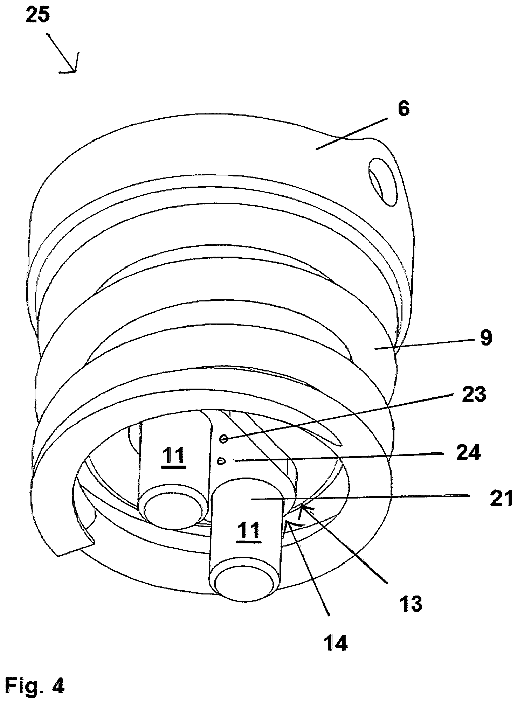

Fig. 4 zeigt ein erfindungsgemäßes Mittel 25 zum Sichern eines vorbeischiebbaren Formteilbereichen in Form einer Schieberaste 9 von unten. Beispielhaft ist ein Auflagebereich mit einer großen Fläche 23 als Ovalfläche 24 dargestellt, bei dem in zwei außermittigen Ovalzentren 21 jeweils eine Festsetzschraube 11 durch eine Durchgangsöffnung 13 im Durchführungsmittel 14 durchgeführt ist.

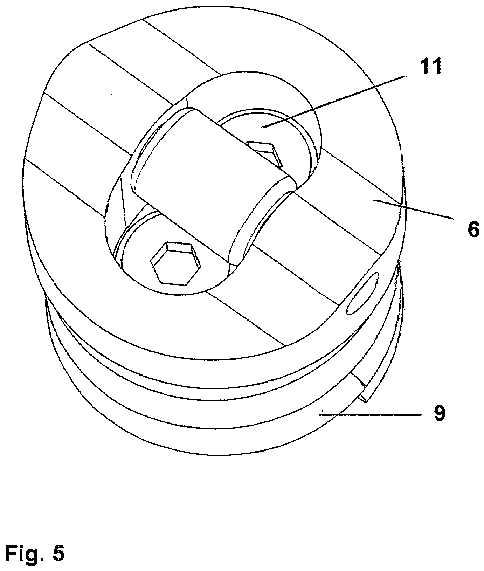

Fig. 5 zeigt ein erfindungsgemäßes Mittel 25 zum Sichern eines vorbeischiebbaren Formteilbereichen in Form einer Schieberaste 9 von oben mit einer Rolle 7 im Gehäuse 6.

Der Schieberraster umfasst ein Gehäuse und eine Rolle, die mit Hilfe einer Achse drehbar am Gehäuse gelagert ist. Das Gehäuse wird mit einer Feder nach oben gedrückt, wobei der Spannungsvorsprung 15 den Hub begrenzt. Hierbei steht ein definierter Bereich der Rolle über den höchsten Punkt des Gehäuses hinaus und bildet im eingebauten Zustand den höchsten Punkt des Schieberrasters. Der Anschlag wird mit Hilfe von einer oder zwei Schrauben befestigt und führt das Gehäuse. Der vorbeigeschobenen Formteilbereich, der gesichert werden soll, muss mit einer Nut / Aussparung etc. versehen sein. Der vorbeigeschobenen Formteilbereich macht eine Fahrbewegung über den Schieberraster, dabei rollt die Rolle um die Achse und drückt das Gehäuse mit der Feder nach unten. Beim Einrasten der Rolle in die Nut / Aussparung des Schiebers wird der Schieberraster durch die Feder nach oben gedrückt und mittels Federkraft gehalten.

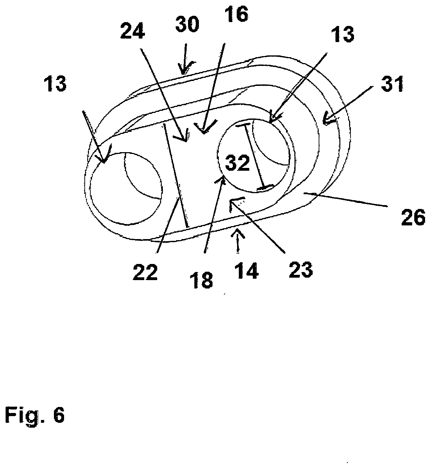

Fig. 6 zeigt einen Ausschnitt eines erfindungsgemäßen Mittels zum Sichern eines vorbeischiebbaren Formteilbereichen. Ein Durchführungsmittel 14 mit zwei Durchführungsöffnungen 13 zum Einsetzen in ein Gehäuse, wie beispielhaft in Fig. 1, 4, 5 dargestellt. Der untere Auflagebereich 16 weist beispielhaft eine Flächenbreite 22 aufweist, die etwa einem Durchmesser 32 einer nicht dargestellten Festsetzschraube entspricht.

### BEZUGSZEICHENLISTE

- 1: Vorrichtung zum Festsetzen und/oder Lösen
- 2: vorbeischiebbarer Formteilbereich
- 3: Schieberaste
- 4: aufnehmender Formteilbereich
- 5: angepasster Bereich
- 6: Gehäuse
- 7: Rolle
- 8: federndes Druckstück
- 9: Schieberastfeder
- 11: Festsetzschraube
- 12: Aufnahme
- 13: Durchgangsöffnung
- 14: Durchführungsmittel
- 15: Spannungsvorsprungsmittel
- 16: unterer Auflagebereich
- 17: korrespondierender Aufsetzbereich
- 18: Randbereich
- 19: Ringfläche
- 21: Ovalzentrum
- 22: Flächenbreite
- 23: Fläche
- 24: Ovalfläche
- 25: Mittel
- 26: Kontaktvorsprung
- 27: Umlaufvorsprung
- 28: Umfangsbereich
- 29: Innenbereich
- 30: Umfang
- 31: Vorsprungsbereich
- 32: Durchmesser

## Patentansprüche

1. Vorrichtung (1) zum Festsetzen und/oder Lösen von Spritzgussformen für Kunststoffspritzguss, die zumindest zwei aufeinander abgestimmte, gegenüberliegende Spritzgießwerkzeugteileelemente aufweisen, insbesondere ein Düsenteilelement und ein Auswerferteilelement, umfassend verschiebliche Bereiche mit vorbeischiebbaren Formteilbereichen (2) eine Schieberaste (3), die in einem aufnehmenden Formteilbereich (4) angeordnet ist und in vorbestimmte, angepasste Bereiche (5) des entsprechenden, vorbeischiebbaren Formteilbereich (2) ausfahrbar ist, umfassend eine in einem Gehäuse (6) drehbar gelagerte Rolle (7) zum Überrollen durch den vorbeischiebbaren Formteilbereich (2), ein federndes Druckstück (8), umfassend das Gehäuse (6) und eine gegen das Gehäuse (6) drückende Schieberastfeder (9), zum Einrasten in eine Ausnehmung, insbesondere Nut oder Aussparung, im vorbeischiebbaren Formteilbereich (2), wobei das Gehäuse ein Spannungsvorsprungsmittel (15) in einem Umfangsbereich (28) zum Verspannen mittels der Schieberastfeder (9) aufweist, eine oder mehrere Festsetzschrauben (11), die durch das Gehäuse (6) hindurch geführt in eine angepasst ausgebildete Aufnahme (12) im aufnehmenden Formteilbereich (4) eingeschraubt ist, **dadurch gekennzeichnet, dass** ein in dem Gehäuse (6) angeordnetes, zentrales Durchführungsmittel (14) vorgesehen ist, wobei die eine oder mehreren Festsetzschrauben (11) durch jeweils eine Durchgangsöffnung (13) des Durchführungsmittels (14) hindurchführt ist/sind, wobei mittels eines an einem Umfang (30) des Durchführungsmittels (14) vorgesehener Kontaktvorsprungs (26) ein Kontakt des Durchführungsmittels (14) an einem korrespondierenden Umlaufvorsprung (27) in einem Innenbereich (29) des Gehäuses (6) vorgesehen ist, und ein unterer Auflagebereich (16) eine Auflage auf einen korrespondierenden Aufsetzbereich (17) mit einem Randbereich (18) der Aufnahme (12) im aufnehmenden Formteilbereich (4) bildet.

2. Vorrichtung nach Anspruch 1, **dadurch gekennzeichnet, dass** der untere Auflagebereich (16) des Durchführungsmittels (14) mindestens etwa eine Fläche (23) aufweist, die größer als eine Ringfläche an einem Randbereich (18) um die Aufnahme oder Aufnahmen (12) für die eine oder mehreren Festsetzschrauben (11) herum mit einer vorbestimmten Dicke ausgebildet ist, insbesondere eine Ringfläche (19) mit etwa 0,5- etwa 1 mm Dicke.

3. Vorrichtung nach einem der Ansprüche 1 oder 2, **dadurch gekennzeichnet, dass** der untere Auflagebereich (16) des Durchführungsmittels (14) als Ovalfläche (24) oder als Kreisfläche über eine Ringfläche hinausragend ausgebildet ist.

4. Vorrichtung nach einem der Ansprüche 1 bis 3, **dadurch gekennzeichnet, dass** der Kontaktvorsprung (26) des Durchführungsmittels (14) als umlaufender Vorsprung durchgehend ausgebildet ist, insbesondere angepasst an die Form des Durchführungsmittels, insbesondere als oval verlaufender Vorsprungsbereich (31) oder als kreisförmiger Vorsprungsbereich und/oder der Vorsprungsbereich eine Tiefe von ungefähr 15% eines Durchmessers des Durchführungsmittels (14) aufweist.

5. Vorrichtung nach einem der Ansprüche 1 bis 4, **dadurch gekennzeichnet, dass** eine Festsetzschraube (11) außermittig, insbesondere in einem Ovalzentrum (21) oder außermittig von einer Kreisfläche des unteren Auflagebereichs (16) angeordnet ist und/oder jeweils zwei Festsetzschrauben (11) durch den unteren Auflagebereich (16) hindurchragend ausgebildet sind, insbesondere jeweils in einem Ovalzentrum (21) der Ovalfläche (24) oder außermittig einer Kreisfläche des unteren Auflagebereichs (16) angeordnet sind.

6. Vorrichtung nach einem der Ansprüche 1 bis 5, **dadurch gekennzeichnet, dass** der untere Auflagebereich (16) eine Flächenbreite (22) aufweist, die etwa einem Durchmesser (32) einer Festsetzschraube (11) entspricht.

7. Vorrichtung nach einem der Ansprüche 1 bis 6, **dadurch gekennzeichnet, dass** größere Festsetzschrauben (11), im Verhältnis zu der Größe des Gehäuses (6) zu verwenden sind, insbesondere M4- oder M5-Schrauben als Festsetzschrauben (11) einzusetzen sind.

8. Vorrichtung nach einem der Ansprüche 1 bis 7, **dadurch gekennzeichnet, dass** die Schieberastfeder (9) austauschbar ist, so dass je nach Anforderungen des vorbeischiebbaren Formteilbereichen (2) austauschbare Schieberastfeder (9) mit verschiedenen Auslösekräften/Auslösehaltekraft einzusetzen sind.

9. Mittel (25) zum Sichern einer Schieberaste eines vorbeischiebbaren Formteilbereichen (2) einer Spitzgussform, mit einer in einem Gehäuse (6) drehbar gelagerten Rolle (7), einem federnden Druckstück (8), umfassend das Gehäuse (6) und eine gegen das Gehäuse (6) drückende Schieberastfeder (9), mit einer oder mehrerer Festsetzschrauben (11), die durch das Gehäuse (6) hindurch geführt in eine angepasst ausgebildete Aufnahme (12) in einem aufnehmenden Formteilbereich (4) einschraubbar sind, **dadurch gekennzeichnet, dass** ein in dem Gehäuse (6) angeordnetes, zentrales Durchführungsmittel (14) vorgesehen ist, wobei die eine oder mehreren Festsetzschrauben (11) durch jeweils eine Durchgangsöffnung (13) des Durchführungsmittels (14) hindurchführt ist/sind, wobei mittels eines an einem Umfang (30) des Durchführungsmittels (14) vorgesehener Kontaktvorsprungs (26) ein Kontakt des Durchführungsmittels (14) an einem korrespondierenden Umlaufvorsprung (27) in einem Innenbereich (29) des Gehäuses (6) vorgesehen ist, und ein unterer Auflagebereich (16) eine Auflage auf einen korrespondierenden Aufsetzbereich (17) zur Aufnahme (12) im aufnehmenden Formteilbereich (4) bildet.

10. Verfahren zum Verwenden einer Vorrichtung (1) zum Festsetzen und/oder Lösen von Spritzgussformen für Kunststoffspritzguss, die zumindest zwei aufeinander abgestimmte, gegenüberliegende Spritzgießwerkzeugteileelemente aufweisen, insbesondere ein Düsenteilelement und ein Auswerferteilelement, nach einem der Ansprüche 1 bis 8, umfassend verschiebliche Bereiche mit vorbeischiebbaren Formteilbereichen (2), eine Schieberaste (6), die in einem aufnehmenden Formteilbereich angeordnet wird und in vorbestimmte, angepasste Bereiche des entsprechenden, vorbeischiebbaren Formteilbereich (2) ausgefahren wird, umfassend eine in einem Gehäuse (6) drehbar gelagerte Rolle zum Überrollen durch den vorbeischiebbaren Formteilbereich (2), ein federndes Druckstück, umfassend das Gehäuse (6) und eine gegen das Gehäuse (6) drückende Schieberastfeder (9), zum Einrasten in eine Ausnehmung, insbesondere Nut oder Aussparung, im vorbeischiebbaren Formteilbereich (2), eine oder mehrere Festsetzschrauben (11), die durch das Gehäuse (6) hindurch in eine angepasst ausgebildete Aufnahme im aufnehmenden Formteilbereich eingeschraubt wird, wobei die eine oder mehreren Festsetzschrauben (11) durch jeweils eine Durchgangsöffnung (13) eines in dem Gehäuse (6) angeordnetem, zentralen Durchführungsmittels (14) hindurchführt wird/werden, wobei mittels eines an einem Umfang (30) des Durchführungsmittels (14) vorgesehener Kontaktvorsprungs (26) ein Kontakt des Durchführungsmittels (14) an einem korrespondierenden Umlaufvorsprung (27) in einem Innenbereich (29) des Gehäuses (6) hergestellt wird, und ein unterer Auflagebereich (16) eine Auflage auf einen korrespondierenden Aufsetzbereich (17) mit einem Randbereich (18) der Aufnahme (12) im aufnehmenden Formteilbereich (4) bildet

## Claims

1. Device (1) for securing and/or releasing injection moulds for plastics injection moulding, having at least two complementary, opposing injection mould portions, in particular a die portion and an ejector portion, comprising displaceable regions having mould regions (2), that can slide away, a slide retainer (3), that is located in a receiving mould region (4), can be pushed into predefined, complementary regions (5) of the corresponding, mould region (2), comprising a roller (7) which is rotatably mounted in a housing (6) and over which the mould region (2), that can slide away, can roll, a spring-loaded pressure piece (8), comprising the housing (6) and a slide retainer spring (9) that presses against the housing (6), for engaging in an opening, in particular a groove or cut-out, in the mould region (2), that can slide away, the housing having a pre-loading projection (15) in a peripheral region (28) for pre-loading by means of the slide retainer spring (9), one or more fixing screws (11) which run through the housing (6) and is/are are screwed into a complementary opening (12) in the receiving mould region (4), a central lead-through means (14), located in the housing (6), is provided, wherein each of the one or more securing screws (11) runs through one through-opening (13) of the lead-through means (14), wherein by means of a contact projection (26) on a periphery (30) of the lead-through means (14) a contact of the lead-through means (14) at a corresponding continuous projection (27) in an inner region (29) of the housing (6) is provided, and a lower face region (16) provides a resting on a corresponding seat region (17) with an edge region (18) of the opening (12) in the receiving mould region (4).

2. Device according to claim 1, **characterized in that** the lower face region (16) of the lead-through means (14) has at least approximately one surface (23) which is larger than an annular surface on an edge region (18) around the opening or openings (12) for the one or more fixing screws (11) with a predefined thickness, in particular an annular surface (19) with approximately 0. 5 - approximately 1 mm thickness.

3. Device according to one of the claims 1 or 2, **characterized in that** the lower face region (16) of the lead-through means (14) is designed as an oval surface (24) or as a circular surface projecting beyond an annular surface.

4. Device according to one of the claims 1 to 3, **characterized in that** the contact projection (26) of the lead-through means (14) is designed as a continuous circumferential projection, in particular adapted to the shape of the lead-through means, in particular as an oval projection region (31) or as a circular projection region and/or the projection region has a depth of approximately 15% of a diameter of the lead-through means (14).

5. Device according to one of the claims 1 to 4, **characterised in that** a fixing screw (11) is arranged eccentrically, in particular in an oval centre (21) or eccentrically from a circular surface of the lower face region (16), and/or two fixing screws (11) in each case are designed to project through the lower face region (16), in particular in each case in an oval centre (21) of the oval surface (24) or eccentrically from a circular surface of the lower face region (16).

6. Device according to one of the claims 1 to 5, **characterized in that** the lower face region (16) has a surface width (22) which corresponds approximately to a diameter (32) of a fixing screw (11).

7. Device according to one of the claims 1 to 6, **characterized in that** larger fixing screws (11) are to be used in proportion to the size of the housing (6), in particular M4 or M5 screws are to be used as fixing screws (11).

8. Device according to one of the claims 1 to 7, **characterized in that** the slide retainer spring (9) is exchangeable, so that, depending on the requirements of the mould regions (2), that can slide away, exchangeable slide retainer springs (9) with different release forces/release holding force can be used.

9. Means (25) for securing a slide retainer of a mould region (2), that can slide away, of an injection mould, having a roller (7) rotatably mounted in a housing (6), a spring-loaded pressure piece (8), comprising the housing (6) and a slide retainer spring (9) which presses against the housing (6), having one or more fixing screws (11) which, guided through the housing (6), can be screwed into a complementary opening (12) in a receiving mould region (4), being possible to guide them through the housing (6), a central lead-through means (14) being provided which is arranged in the housing (6), wherein the one or more securing screws (11) are each guided through a through-opening (13) of the lead-through means (14), wherein by means of a contact projection (26) provided on a periphery (30) of the lead-through means (14) a contact of the lead-through means (14) is provided on a corresponding continuous projection (27) in an inner region (29) of the housing (6), and a lower face region (16) forms a rest on a corresponding seat region (17) for an opening (12) in the receiving mould region (4).

10. Method for using a device (1) for securing and/or releasing injection moulds for plastics injection moulding, which have at least two complementary, opposing injection mould portions, in particular a die portion and an ejector portion, according to one of the claims 1 to 8, comprising displaceable regions with mould region (2), that can slide away, a slide retainer (6), which is arranged in a receiving mould region and is extended into predetermined, adapted regions of the corresponding, mould region (2), that can slide away, comprising a roller rotatably mounted in a housing (6) for rolling over by the mould region (2), that can slide away, a spring-loaded pressure piece comprising the housing (6) and a slide retainer spring (9) pressing against the housing (6) for engaging in an opening, in particular a groove or cut-out, in the mould region (2), that can slide away, one or more fixing screws (11) which are screwed through the housing (6) into an appropriately designed opening in the receiving mould region, the one or more fixing screws (11) being guided through in each case one through-opening (13) of a central lead-through means (14) arranged in the housing (6), wherein by means of a contact projection (26) provided on a periphery (30) of the lead-through means (14) a contact of the lead-through means (14) is established on a corresponding continuous projection (27) in an inner region (29) of the housing (6), and a lower face region (16) forms a rest on a corresponding seat region (17) with an edge region (18) of the opening (12) in the receiving mould region (4).

## Revendications

1. Dispositif (1) pour la fixation et/ou le desserrage de moules par injection en matière plastique comportant au moins deux éléments d'outil de moulage par injection opposés et coordonnés, en particulier un élément de buse et un élément d'éjecteur, comprenant des zones de moulage pouvant être inclinées (2) une barre coulissante (3) disposée dans une zone réceptrice (4) et extensible dans des zones prédéterminées et ajustées (5) de la zone réceptrice réceptrice (2) correspondante, comprenant un rouleau orientable (7) placé dans un boîtier (6) pour le renverser à travers la zone réceptrice réceptrice (2), un embout ressort (8) comprenant le boîtier (6) et un ressort de serrage coulissant (9), exerçant une pression sur le boîtier (6) pour l'enclenchement dans un évidement, en particulier une fente ou un évasement, dans la zone d'élément de moule coulissant (2), dans lequel l'enveloppe comporte un précontrainte (15) dans une gamme de circonférence (28) pour le serrage au moyen du ressort de charge coulissant (9), une ou plusieurs vis de fixation 0, passant à travers l'enveloppe (6) et aboutissant à une prise aménagée (12) dans l'enveloppe de l'enveloppe (4), étant vissées dans l'enveloppe un dispositif d'exécution central (14) est prévu, une ou plusieurs vis de fixation (11) passant chacune par une ouverture de passage (13) du dispositif d'exécution (14) et un contact du dispositif d'exécution (14) à un niveau (30) du dispositif d'exécution (14) au moyen d'une prise de contact du dispositif d'exécution (14) à un niveau (30) du dispositif d'exécution (14) au niveau d'un correspondant une partie intérieure (29) de l'enveloppe (6) et une partie inférieure (16) constitue une charge sur une zone d'enroulement correspondante (17) avec une zone d'enroulement (18) de l'enroulement (12) dans la zone d'enroulement (4).

2. Dispositif selon la revendication 1, **caractérisé en ce que** la zone d'appui inférieure (16) du moyen de passage (14) présente au moins approximativement une surface (23) qui est formée plus grande qu'une surface annulaire sur une zone de bord (18) autour du ou des logements (12) pour la ou les vis de fixation (11) avec une épaisseur prédéterminée, en particulier une surface annulaire (19) avec une épaisseur d'environ 0,5- environ 1 mm.

3. Dispositif selon l'une des revendications 1 ou 2, **caractérisé en ce que** la zone d'appui inférieure (16) du moyen de traversée (14) est conçue comme une surface ovale (24) ou comme une surface circulaire dépassant une surface annulaire.

4. Dispositif selon l'une des revendications 1 à 3, **caractérisé par le fait que** la saillie de contact (26) du moyen d'exécution (14) est formée de manière continue comme une saillie circulaire, adaptée en particulier à la forme du moyen d'exécution, notamment sous forme de saillie ovale (31) ou de saillie circulaire et/ou de saillie d'une profondeur de présente environ 15% du diamètre du moyen d'exécution (14).

5. Dispositif selon l'une des revendications 1 à 4, **caractérisé par le fait qu'**une vis de fixation (11) est disposée à l'extérieur, en particulier dans un centre ovale (21) ou à l'extérieur d'une surface circulaire de la zone d'application inférieure (16) et/ou que deux vis de fixation (11) traversent chacune la zone d'application inférieure (16), en particulier chacune disposés dans un centre ovale (21) de la surface ovale (24) ou à l'extérieur d'une surface circulaire de la zone de montage inférieure (16).

6. Dispositif selon l'une des revendications 1 à 5, **caractérisé par le fait que** la zone de fixation inférieure (16) présente une largeur de surface (22) correspondant approximativement au diamètre (32) d'une vis de fixation (11).

7. Dispositif selon l'une des revendications 1 à 6, **caractérisé par** l'utilisation de vis de fixation plus grandes (11) par rapport à la taille du boîtier (6), en particulier des vis M4 ou M5 comme vis de fixation (11).

8. Dispositif selon l'une des revendications 1 à 7, **caractérisé par le fait que** le ressort de charge coulissant (9) est remplaçable, de sorte que, selon les exigences des zones de pièces de moule coulissant (2), un ressort de charge coulissant (9) remplaçable doit être utilisable avec des forces de déclenchement/de retenue différentes.

9. Moyens (25) pour fixer un bouton coulissant d'une partie coulissante (2) d'un moule en dentelle, avec un rouleau pivotant placé dans un boîtier (6) (7), une presse à ressort (8), comprenant le boîtier (6) et un ressort de charge coulissant (9), avec une ou plusieurs vis de fixation (11) qui, passant à travers le boîtier (6), sont vissables dans un boîtier aménagé (12) dans un compartiment de découpage (4), à l'aide d'un dispositif central d'exécution (14) placé dans le boîtier (6), une ou plusieurs vis de fixation (11) traversant chacune une ouverture de passage (13) de l'équipement (14), avec un contact de l'équipement (14) sur une saillie correspondante (27) dans une zone intérieure (29) de l'équipement (29) de l'équipement (14). (6) et une plage de montage inférieure (16) constitue une charge sur une plage de montage correspondante (17) à recevoir (12) dans la zone de montage réceptrice (4).

10. Méthode d'utilisation d'un dispositif (1) pour fixer et/ou desserrer des moules par injection en matière plastique comportant au moins deux éléments d'outil de moulage par injection opposés et coordonnés, en particulier un élément de buse et un élément d'éjecteur, complètement déplaçables selon l'une des revendications 1 à 8 zones comportant des parties de moules coulissantes (2), un bouton coulissant (6) placé dans une zone de moules réceptrices et évacué dans des parties prédéterminées et ajustées de la zone de moules coulissantes correspondante (2), comprenant un rouleau placé dans un boîtier (6) pour le renversement à travers la partie de moules coulissantes (2), un ressort l'élément de pression, comprenant le boîtier (6) et un ressort de charge coulissant (9), pressant contre le boîtier (6) pour l'enclenchement dans un évidement, notamment une fente ou un évidement, dans la zone de l'élément de moule coulissant (2), une ou plusieurs vis de fixation (11), vissées à travers le boîtier (6) dans une prise aménagée adaptée dans la zone de la pièce d'admission, une ou plusieurs vis de fixation (11) passant chacune par une ouverture de passage (13) d'un dispositif central d'exécution (14) placé dans le boîtier (6), par une saillie de contact prévue à une circonférence (30) du dispositif (14) (26), un contact du dispositif (14) est établi à une circonférence (27) correspondante dans une partie intérieure (29) du boîtier (6) et une zone inférieure (16) une fixation sur une zone d'assise correspondante (17) avec une zone de bordure (18) de l'enregistrement (12) dans le secteur de la partie de moule réceptrice (4).
